(19) Europäisches Patentamt
European Patent Office
Office européen des brevets

(11) **EP 3 967 874 B1**

(12) **EUROPEAN PATENT SPECIFICATION**

(45) Date of publication and mention
of the grant of the patent:
**29.05.2024 Bulletin 2024/22**

(21) Application number: **20382809.0**

(22) Date of filing: **15.09.2020**

(51) International Patent Classification (IPC):
**F03D 13/10** *(2016.01)*     **F03D 13/40** *(2016.01)*
**E04H 12/34** *(2006.01)*

(52) Cooperative Patent Classification (CPC):
**E04H 12/34; E04H 12/345; F03D 13/112;**
**F03D 13/402;** E04H 12/085; F03D 13/20;
F05B 2230/61; Y02E 10/72; Y02P 70/50

(54) **MOUNTING STRUCTURE FOR SUPPORTING A TOWER SECTOR**

MONTAGESTRUKTUR ZUR STÜTZUNG EINES TURMSEKTORS

STRUCTURE DE MONTAGE POUR SOUTENIR UNE PARTIE DE TOUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**16.03.2022 Bulletin 2022/11**

(73) Proprietor: **Siemens Gamesa Renewable Energy**
**Innovation &**
**Technology S.L.**
**31621 Sarriguren (Navarra) (ES)**

(72) Inventors:
• **Del Castillo Artazco, Alberto**
**31015 PAMPLONA (ES)**
• **Erro Martinez, Carlos**
**31015 PAMPLONA (ES)**
• **Señas Perez, Vicente**
**31015 Pamplona (ES)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**AU-A1- 2018 429 852       CN-A- 108 975 244**
**DE-A1-102009 040 200**

**Description**

The invention describes a mounting structure for supporting a tower sector, a respective mounting system and a method of connecting tower sectors. Prior art can be found in AU 2018 429 852 A1.

Tall towers such as wind turbine towers are often constructed as towers with a closed wall (or "skin") by assembling tower sections. To this end, each tower section is equipped with flanges. In order to connect tower sections upon another or to connect them with a top element or to the ground, the tower sections comprise face flanges at their faces. Typically, the tower sections have a cylindrical shape with annular face flanges.

Especially in the technical field of wind turbines, towers that are constructed of tower sections are essential. Due to the increasing need of energy, the construction of bigger towers is of great importance. Generating more energy per turbine results in wind turbines with larger generators, which in turn need larger blades that are able to obtain more energy from the incident wind. These wind turbines then require taller and more stable towers to support blades, nacelle and other components of the wind turbine. Nowadays, for example, towers of wind turbines have diameters of about 6 to 8 meters.

Such tower-dimensions result in difficulties in transporting the tower from the manufacturing site to the construction site of the wind turbine. For example, a tower having a diameter of about 6 m cannot be transported over conventional roads. Thus, the tower is preferably constructed from said tower sections mentioned above.

In general, there are two types of tower sections: sections in the shape of a whole cylinder that are stacked upon another and sections in the shape of an arc-sector of a cylinder (a wall part with the cross section of a circler-arc) that have to be assembled to form a whole cylinder. The sections in the shape of an arc-sector of a cylinder are designated as "tower sectors" in the following to indicate that they are special tower sections not forming a whole cylinder.

A segmentation of a tower into tower sectors has the advantage that the transport is easier. For example, transporting of tower sectors having a breadth of less than 4 meters over conventional roads is possible. Thus, tower sectors can be transported to a construction site by trucks and then assembled to form a tower (or at least a closed tower section) on the construction site.

Often, the tower sectors have straight edge flanges at the edges of their skin surface perpendicular to the face flanges on their faces. In an erected position of the tower, the face flanges would be arranged horizontally and the edge flanges would be arranged vertically. In this case, the tower sectors are connected to each other by connecting these edge flanges with screws, bolts or rivets.

Typically, a number of tower sectors forming a complete cylinder are arranged to form the tower in a lying position (with horizontally arranged edge flanges). The edge flanges are connected with each other and the resulting tower (or tower section in form of a whole cylinder) is then turned upright.

A disadvantage of the state of the art is that this construction is extensive and especially requiring a serious amount of labour time, not only for the connection of the tower sectors, but for a proper arrangement of the tower sectors in a position that they can be correctly connected with another. For connecting the edge-flanges they have to be arranged to each other in a way that their facing surfaces are exactly on parallel planes, with their flange-holes overlapping.

It is the object of the present invention to improve the known systems, devices and methods to facilitate an improvement in assembling towers from tower sectors.

This object is achieved by a mounting structure for supporting a tower sector according to claim 1, a respective mounting system according to claim 11 and a method of connecting tower sectors according to claim 12.

It is made clear that the tower sectors mentioned in the following are wall parts of a tower, especially with a cylindrical and/or conical shape, typically with a closed wall ("skin"). An integer number of tower sectors can be assembled to form a tower or a tower segment forming the whole circumference of the tower. As said above, the tower sectors comprise face flanges at their faces, especially annular face flanges in the form of an arc corresponding to the face of the wall of the tower sector. On the edges perpendicular to the faces, the tower sectors preferably comprise straight edge flanges to be connected with other tower sectors. Although the whole circumference of a tower may be formed with more tower sectors, it is preferred that three tower sectors, each of an arc of 120°, or four tower sectors, each of an arc of 90°, are forming the circumference of the tower. In the following, often an example of three circular tower sectors of 120° forming a cylindrical tower will be used, without necessarily restricting the scope of the invention. The dimensions of the tower sectors are in the size range of meters, wherein the breadth is bigger than one meter, preferably bigger than 2 or even 3 meters, but preferably smaller than 5 meters, especially smaller than 4 meters to be able to be transported on conventional roads.

In the following, the expressions "support member" and "supporting member" are used interchangeably.

A mounting structure according to the invention is used (designed) for supporting a tower sector. As said above, the tower sector comprises predefined face flanges covering the curved faces of the surface shell of the tower sector. The tower sector comprises the following components:

-   An elongate supporting member designed to be mounted on a surface with a base area on an elongate side of the support member.

The surface is preferably plane, e.g. a floor, a groove or a rail, thus, the base area is also preferably plane. Since the base area is the side the supporting member stands on during normal use, it could be designated as "bottom side". The supporting member is elongate in order to render a stable support to one face of a tower sector without the danger of tilting. While standing on the base area and used for support of a tower sector, the length of the supporting member is oriented essentially horizontal (parallel to a face of the lying tower sector) and is the longest dimension followed by the height as second biggest dimension and the breadth that can be relatively small.

- An elongate mounting member with two fixing means designed to be releasable fastened as a cord to a circular face flange of a tower element.

The mounting member is elongate to act as a cord of the face flange that is an arc of a circle. For a secure setup, the cord should be at least one third of the length of the face flange, especially at least one half. The fixing means can e.g. be holes or bolts. Holes can be aligned with holes of a face flange and the mounting member connected to the face flange with screws or bolts, bolts can be used to be directly inserted in holes of a face flange and secured by nuts. It is important that the mounting member can be securely fastened to the face flange of a tower element to be able to hold it firmly. However, after transportation of the tower sectors and/or assembling the tower sectors to form a tower, the mounting members should be released from the tower sectors.

- The supporting member and the mounting member are arranged parallel according to their longitudinal axes and pivotable

connected with each other at their longitudinal ends to form legs of an angle, so that the plane of rotation between the supporting member and the mounting member is perpendicular to the base area.

Thus, when the supporting member is mounted on a plane surface with its base area, the supporting member and the mounting member can pivot like the blades of a scissor lying on the floor with a horizontal axis of rotation.

A mounting system according to the invention comprises at least two mounting structures according to the invention. The mounting structures are positioned laterally reversed (e.g. mirrored) to each other on a guiding member, e.g. a groove, rail or plane. In order to relatively move the mounting structures relatively to each other on the guiding member, such that the distance between the mounting structures can be adjusted, they are connected to adjusting means designed to move the mounting structures. Such adjusting means can be ropes in a very easy setup, or a tractel. In a more elaborate setup, the adjusting means could be threaded bolts or hydraulic cylinders. The adjusting means can be fastened at the guiding member and one mounting structure or two mounting structures on a guide member can be connected with each other via the adjusting means. It is clear that the orientation of the mounting structures is such that when pivoting, the ends of the mounting members not connected to the support members rotate to each other, so that two tower sectors facing upwards with their inner side can be positioned to form a continuous arc of a cylinder. Thus, the orientation of the mounting structures is such that the connected ends of the mounting members with the respective support members are facing each other for tower sectors facing upwards with their inner side. For tower sectors facing down with their inner side (especially for tower sectors with an opening angle of 90°), the orientation of the mounting structures is such that the non-connected ends of the mounting members with the respective support members are facing each other.

A method according to the invention is advantageous for connecting tower sectors with predefined face flanges covering the curved faces of the surface shell of the tower sector. The method comprises the following steps:

- Providing at least two tower sectors, each with a mounting structure according to the invention on each face flange. Thus, the tower sectors are held on both faces by one mounting structure. It is preferred that the inner side of at least two tower sectors is facing upwards, since then an optimal positioning of the tower sectors is very easy.

- providing at least two guiding members designed to guide the mounting structures.

It is clear that the guiding members have to be arranged on both sides of the tower sectors to guide the mounting structures on both sides. It is preferred that the guiding members are guiding rails or guiding grooves to provide a secure movement of the mounting structures. This is also valid for the above described mounting system.

- Arranging two tower sectors with mounting structures parallel besides each other so that the mounting structures on both faces of the tower sectors are mounted on the same guide member.

Thus, when seen from above, the two tower sectors are lying beneath each other with a flush fit of their faces (the faces on both sides each lie on the same plane). This is very important, since the face flange of the resulting tower (segment) should be plane. In addition, when there are edge flanges, they will have holes at well-defined positions, which must overlap to be correctly and easily bolted, riveted or screwed. Thus, when the face flanges are correctly adjusted (on the same plane), the holes of the edge flanges will fit to each other.

- Rotate the mounting members of the mounting structures around their pivotable connection to their supporting member, especially with a raising mechanism, such that radii of the tower sectors facing each other are both vertical. Now, the tower sectors are tilted to another so that they together form an arc of a cylinder. They could be hinged by cranes, however it would be advantageous to tilt them with said raising mechanism (e.g. hydraulic cylinders) that is attached between a mounting member and a support member and designed to press the loose end of the mounting member upward. The final position of the tower sectors should be such that the (end)radii of the tower sectors (this would also be the edge-plane of the edge flanges) facing each other are both vertical. This means that the tangent lines of the edges of the tower sectors facing each other (upper edges when inner sides facing down or lower edges when inner sides facing up) are oriented horizontally.

- Adjusting the distance between the tower sectors until the sides of the tower sectors facing each other meet. Now the mounting structures are shifted towards each other until the edges tower sectors (especially their facing edge flanges) touch each other.

- Connecting the tower sectors.

Now it is very easy to connect the tower sectors either by welding, or particularly preferably by connecting their edge flanges by screwing, bolting or riveting.

The method can preferably be performed by using a mounting system according to the invention.

A wind turbine tower according to the invention is built by using a mounting structure according to the invention and/or by a method according to the invention. Since the mounting structure is only connected to the face flanges of the tower, there are no marks on the tower skin by conventional supporting means.

Particularly advantageous embodiments and features of the invention are given by the dependent claims, as revealed in the following description. Features of different claim categories may be combined as appropriate to give further embodiments not described herein.

According to a preferred mounting structure, the mounting member is pivotable connected to the supporting member with a first end, while the opposite, second end of the mounting member is movable in a circle. It is particularly preferred that the first end of the mounting member is pivotable connected to the supporting member with a screw or bolt. As said above, it is very advantageous that the mounting member and the supporting member pivot like blades of a scissor. With "end" it is preferably meant that the distance of the point of connection to the edge of the mounting member and of the supporting member is less than the height of the respective element in this area.

According to a preferred mounting structure, the supporting member comprises an endstop to prevent a rotation of the mounting member beyond a defined supporting position. This supporting position is preferably the position where the longitudinal axes of the two members are parallel to each other (in order to secure a transport position) and/or the position where a tower sector would be tilted too much (in order to prevent the tower sector from turning over). This endstop is preferably a baseplate, a block or a bolt. It is particularly preferred that the endstop is positioned at least in the area of the second end of the mounting member.

A preferred mounting structure, comprises a raising mechanism designed to raise one end of the mounting member relative to the supporting member in order to turn it around the pivotable connection with a force. Such raising is already described in the course of the method. Thus, the raising mechanism will achieve a tilting of a tower sector around its length. The raising mechanism comprises preferably a hydraulic cylinder, however, it could also be any other sort of linear motor or a threaded lifting rod.

According to a preferred mounting structure, the support member comprises a hooked recess at the end ("free end") opposite to the end where the supporting member is connected to the mounting member designed to mount a raising mechanism. In this hooked recess, a bolt or loop of a raising mechanism can be mounted to achieve a releasable connection to the support member. Thus, one end (e.g. the actor) of a raising mechanism can be connected to the free end of the mounting member (e.g. by using a hole in or a bolt on the mounting member) and the other end of the raising mechanism (stator) can be mounted on the support member. Thus the mounting structure can be used without raising mechanism (e.g. during transport as transport structure), and for construction, the raising mechanism is attached to the mounting structure in order to pivot the mounting member.

It is particularly preferred that the second end of the mounting member comprises a slotted recess overlapping with the hooked recess such that the mounting member is able to rotate even with a raising mechanism mounted in the hooked recess.

According to a preferred mounting structure, the support member and mounting member are shaped such that a raising mechanism can be installed even if the mounting member is attached to a flange of a tower sector. This, embodiment is very advantageous for subsequently attaching a raising mechanism, e.g. after transport.

According to a preferred mounting structure, the mounting member has the shape of a board arranged such that the plane of the board lies parallel to the plane of rotation. It is further preferred that an upper edge of the mounting member comprises the fixing means, the upper edge especially having the circular shape of a predefined flange (from tower sectors that should be held by the mounting structure). Alternatively or additionally, a bottom edge opposite to the upper edge has preferably a straight shape. Alternatively or additionally, a side edge between the upper edge and the bottom edge is preferably inclined relative to a line perpendicular to the bottom edge and especially bent.

According to a preferred mounting structure, the supporting member has the shape of a board arranged such that the plane of the board lies parallel to the plane of rotation. It is preferred that one bottom edge (comprising or being the base area), that is designed to be mounted on a (plane) surface, has a plane shape. Alternatively or additionally, an upper edge opposite to the bottom edge (base area) has preferably a curved shape, especially wherein the end where the supporting member is connected to the mounting member is higher than the opposite end. Alternatively or additionally, a side edge between the upper edge and the bottom edge is preferably inclined relative to a line perpendicular to the bottom edge.

A preferred mounting structure, comprises an additional support member, especially wherein the two support members are similar to each other, wherein the mounting member is arranged between the two support members. Thus, there is a parallel setup of a support member followed by a mounting member, again followed by a support member. This setup is very stable.

According to a preferred mounting structure, concerning the distance D between the fixing means and a predefined radius R of a tower sector, the height H of the fixing means to the base area of the support member is so big that a tower sector with the radius R fixed in the fixing means with its face flange lies above the base area. Since the cross section of the tower sector is a circular arc, it is preferred that

$$H = A + R - \sqrt{R^2 - D^2/4} \,, \qquad (1)$$

with A > 0 cm, preferably A > 50 cm. This means that the mounting structure can act as a cord of a circular arc (the face flange) and additionally holt a tower sector so high over a ground that it does not touch it. Thus, the mounting structure can also be used as transport security element, at least for a tower sector with its inner side facing upwards.

A preferred mounting structure is especially advantageous for a tower sector held with the inner side facing downwards. In this case, the opening angle $\alpha$ of the tower sector has to be considered. Concerning again the distance D between the fixing means and the predefined radius R of a tower sector, the height H of the fixing means to the base area of the support member is

$$H = B + R \cdot \cos(\alpha/2) + \sqrt{R^2 - D^2/4} \,, \qquad (2)$$

with B > 0 cm, preferably B > 50 cm. Concerning a preferred tower sector with $\alpha$=120° (three sectors form a whole cylinder), $\cos(\alpha/2)$=0.5 and concerning a preferred tower sector with $\alpha$=90° (four sectors form a cylinder),

$$\cos(\alpha/2) = \sqrt{0.5} \,.$$

A preferred mounting structure that is able to support a preferred tower sector with $\alpha$=120° and radius R with both, inner side up and inner side down, should have a distance D between the fixing means of D > 1.5R, especially D > 1.7R, but preferably D < 1.8R, especially D < 1.75 R, while D = 1.73R would be a good value.

A preferred mounting structure that is able to support a preferred tower sector with $\alpha$=90° and radius R with both, inner side up and inner side down, should have a distance D between the fixing means of D > 1.2R, especially D > 1.35R, but preferably D < 1.45R, especially D < 1.6 R, while D = 1.41R would be a good value.

This means that the mounting structure can act as a cord of a circular arc (the face flange) and additionally hold a tower sector so high over a ground that it does not touch it. Thus, the mounting structure can also be used as transport security element, at least for a tower sector facing upwards, but also for a tower sector facing downwards when the dimensions are chosen appropriately.

According to a preferred method, a tower sector is connected to mounting structures with each face flange (on both faces) such that the tower sector is arranged interior surface up or down. It is preferred that for construction at least two tower sectors are arranged interior surface up and at least one tower sector is arranged interior surface down on mounting structures. This setup allows e.g. three tower sectors with an opening angle of $\alpha$=120° to pre-configurate for construction, since two lying tower sectors facing upward can be connected to form a basis for the third, facing downward, that can be put upon the other two like a "roof".

According to a preferred method, a tower sector is moved to the construction site by using the mounting structures as transport securing device. When the dimensions of the mounting structures are chosen appropriately, the tower sectors can be stacked by stacking their mounting structures. So, several tower sectors can be put upon another, at least when they are all arranged inner side up or all inner side down.

According to a preferred method, a raising mechanism is attached to the mounting structures of a tower sector after the mounting members are attached to the tower sector. This means that they can be transported without the raising mechanism and on construction site, the raising mechanism can be applied and the tower sectors can be tilted while held by the mounting structures.

Preferably, the length of the supporting member is bigger than 1 m, especially bigger than 1.5 m, but preferably shorter than 4 m, especially shorter than 3 m. Preferably, the height of the supporting member is bigger than 0.1 m, especially bigger than 0.3 m, but preferably shorter than 1 m, especially shorter than 0.8 m. Preferably, the breadth of the supporting member is bigger than 0.5 cm, especially bigger than 1 cm. For better stability, it is preferred that the thickness (breadth) is bigger than 2 cm, but preferably smaller than 10 cm, especially shorter than 5 cm to spare weight and volume. The same dimension ranges are also preferred for the mounting member.

Other objects and features of the present invention will become apparent from the following detailed descriptions considered in conjunction with the accompanying drawings. It is to be understood, however, that the drawings are designed solely for the purposes of illustration and not as a definition of the limits of the invention. All figures are perspective and/or schematic.

Figure 1 depicts a wind turbine built with a tower in accordance with the present invention,

Figure 2 shows three tower sectors with mounting structures according to the invention,

Figure 3 shows tower sectors with mounting structures according to the invention used as transport security on trucks,

Figure 4 shows a tower sector with mounting structures and a raising mechanism according to the invention,

Figure 5 shows a tilted tower sector held by mounting structures according to the invention,

Figure 6 shows a mounting system according to the invention,

Figure 7 shows a tower sector transported to the mounting system of figure 6,

Figure 8 shows the forming of a tower using a mounting system according to the invention,

Figure 9 shows the assembly of a tower using a mounting system according to the invention,

Figure 10 shows a schematic block diagram of the process flow of a preferred method according to the invention.

In the diagrams, like numbers refer to like objects throughout. Objects in the diagrams are not necessarily drawn to scale.

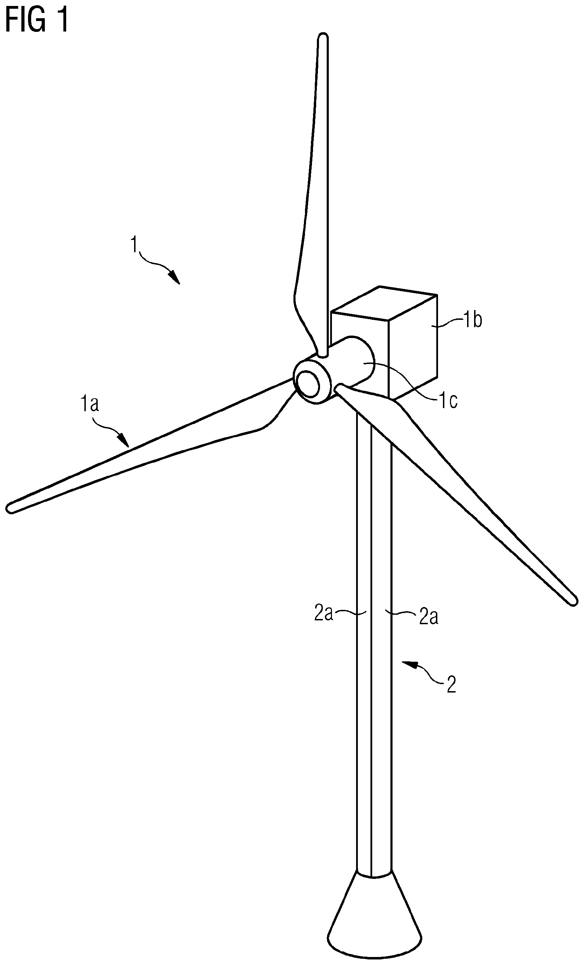

Figure 1 depicts a wind turbine 1 in accordance with embodiments of the present invention. The wind turbine 1 includes one or more rotor blades 1a on a rotor 1a that connect to a hub 1c of the wind turbine 1. The hub 1c is connected to a nacelle 1b that is atop a wind turbine tower 2 built from, especially identical, tower sectors 2a.

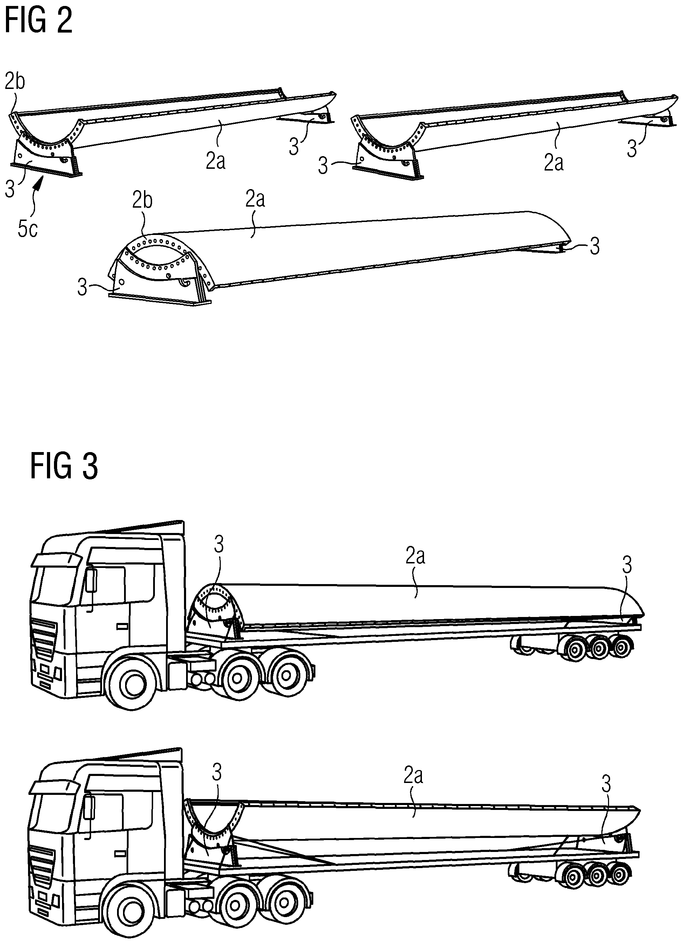

Figure 2 shows three tower sectors 2a with mounting structures 3 according to the invention. The mounting structures 3 are bolted or screwed to the face flanges 2b of the tower sectors 2a. The tower sectors 2a have an opening angle of 120° so that three tower sectors 2a are forming one cylindrical tower. For an easy assembly process shown in the following figures, two tower sectors 2a are facing with their inner side upwards (upper row) and one tower sector 2a is facing downwards (bottom). With their flat base areas 5c the mounting structures 3 have a stable platform on a plane ground or on a loading area of a truck (see figure 3).

Figure 3 shows tower sectors 2a with mounting structures 3 according to the invention used as transport security on trucks. It can easily be seen that the mounting structures 3 act as transport security for the tower sectors 2a shown in figure 2.

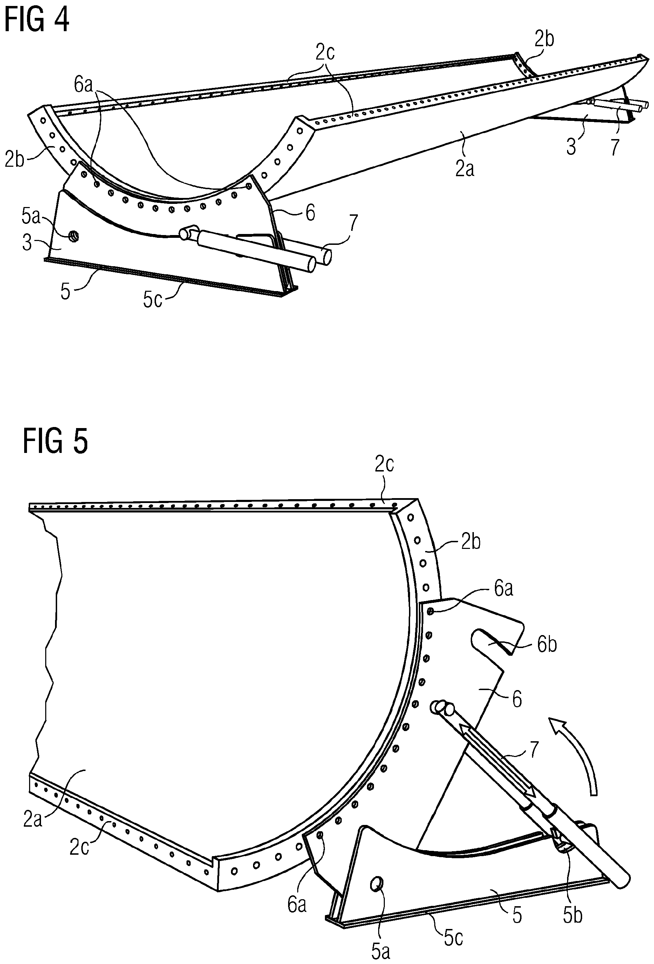

Figure 4 shows a tower sector 2a with mounting structures 3 and a raising mechanism 7 according to the invention. Here holes 6a in the mounting member 6 of a mounting structure 3 can be seen. These holes 6a act as fixing means 6a and are fitting the holes of the face flange 2b of the tower sector 2a, the mounting structures 3 can be bolted or screwed to the face flange 2b and releasable connected with the tower sector 2a.

After transport (see figure 2), there could be applied a raising mechanism 7 to the mounting structures 3. The actor of the raising mechanism 7, that is here a hydraulic cylinder, is mounted in holes or with bolts of the mounting member 6.

The raising mechanism is used to tilt the tower sector 2a to arrange one of the edge flanges 2c vertically. This is done by lifting one end of the mounting members 6 of the mounting structures 3 on both sides of the tower sector 2a and pivot them around a bolt 5a connecting the mounting member 6 to the support member 5 (see also figure 5).

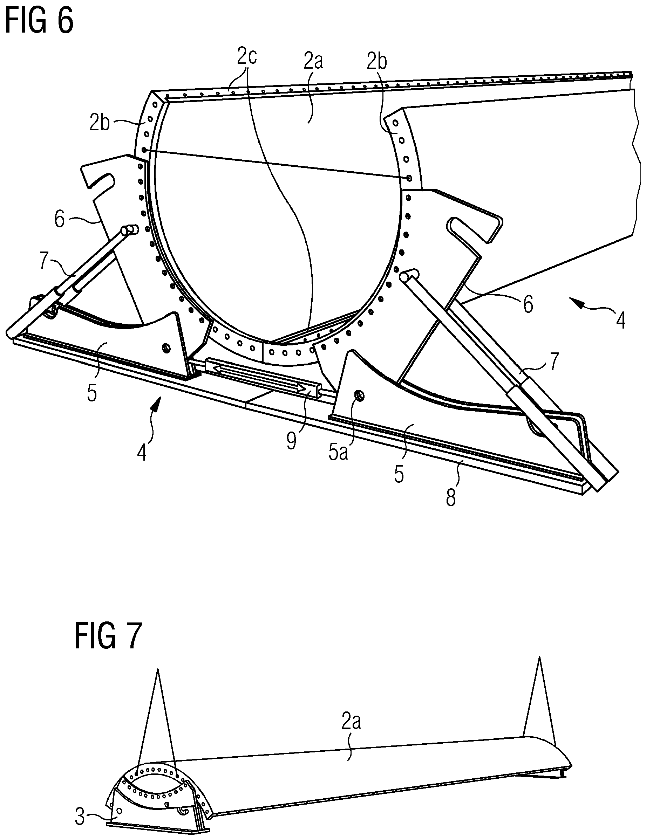

Figure 5 shows a tilted tower sector 2a held by mounting structures 3 according to the invention. As can be seen, the lower edge flange 2c is now held vertically to be connected with another edge flange 2c (see figure 6). Here the mounting member 6 is pivoted around the bolt 5a while the support member 5 stands firmly on the ground (or on a guiding member 8 as shown in figure 6).

The support member 5 comprises a hooked recess 5b at the "free" end (free: not connected by the bolt 5a). The hooked recess 5b is designed to mount the raising mechanism 7. Thus, the raising mechanism 7 can be attached to the mounting member 6 with its actor and its stator can then be easily introduced into the hooked recess 5b that holds the stator while the raising mechanism 7 is in action.

The "free" end of the mounting member 6 comprises a slotted recess 6b overlapping with the hooked recess 5b such that the mounting member 6 is able to rotate even with a raising mechanism 7 mounted in the hooked recess 5b.

Figure 6 shows a mounting system 4 according to the invention. This mounting system 4 comprises at least two mounting structures 3 as seen e.g. in figure 5, wherein the mounting structures 3 are positioned laterally reversed to each other so that the tilted tower sectors 2a are mirrored to each other. As can be seen, the lower edge flanges 2c are each positioned vertically and fit perfect to be connected with another.

The mounting structures 3 are positioned on a guiding member 8, here a rail, wherein the mounting structures 3 are connected to adjusting means 9, here a hydraulic cylinder, designed to move the mounting structures 3 relatively to each other on the guiding member 8. With this adjusting means 9, the distance between the mounting structures 3 can be adjusted (see double arrow) and the edge flanges 2c can be brought into contact with another.

Figure 7 shows a tower sector 2a transported to the mounting system 4 of figure 6, where two tower sectors 2 are already connected with their lower edge flanges 2c. The tower sector 2a is hung on a crane (not shown, only the hangers at the sides of the tower sector 2a), removed from the mounting structure 3 that remains on the ground, and lifted to the two connected tower sectors 2a.

It should be noted that the two connected tower sectors 2a are the two tower sectors 2a of figure 2 facing upwards and the tower sector 2a now lifted is the one facing downwards in figure 2. So all tower sectors 2a have already been delivered in the right positions for assembly.

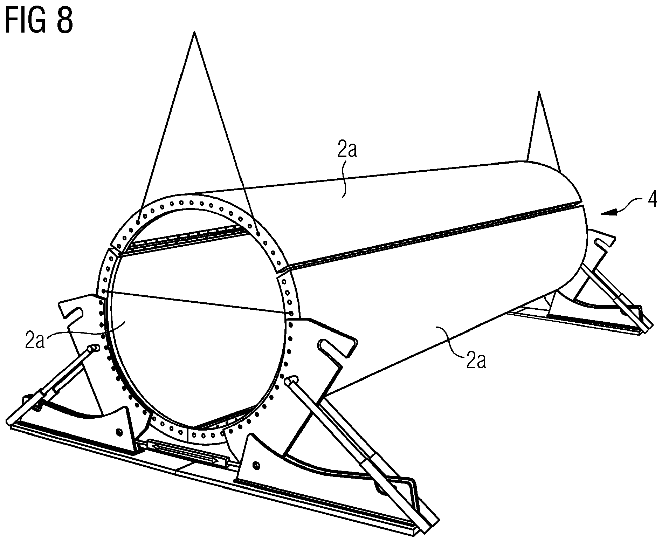

Figure 8 shows the forming of a tower 2 by putting the tower sector 2a lifted in figure 7 on the tower sectors 2a in the mounting system 4 shown in figure 6.

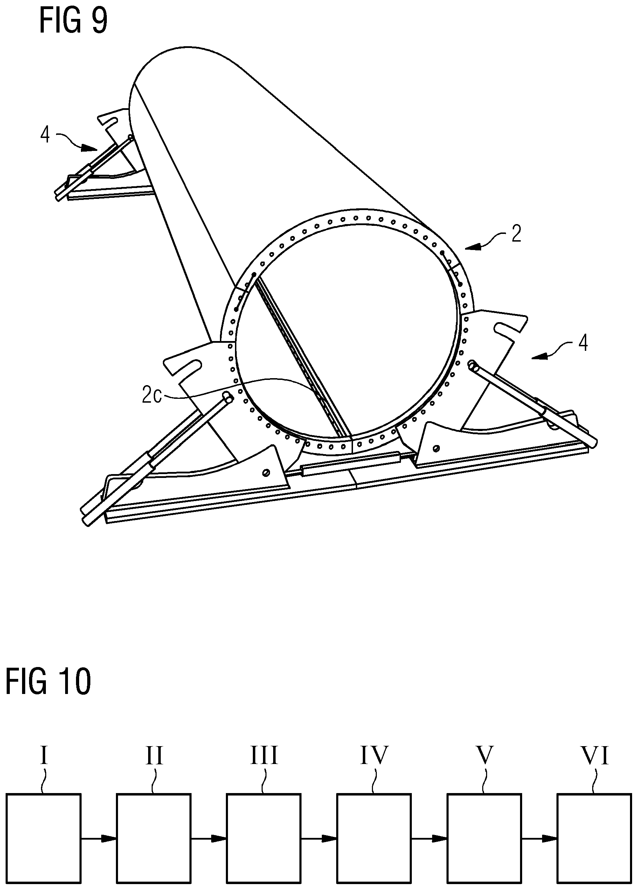

Figure 9 shows the assembly of the tower 2 after the forming shown in figure 8. The upper tower sector forming a "roof" on the two lower tower sectors 2 is now connected with these two tower sectors 2a by connecting the respective edge flanges 2c (hidden due to perspective, but looking the same as the bottom edge flange-connection).

Although the method of construction of a tower can be derived from the preceding figures, it is now described in summary.

Figure 10 shows a block diagram of the process flow of a preferred method for connecting tower sectors 2a with predefined face flanges 2b covering the curved faces of the surface shell of the tower sectors 2a according to the invention.

In step I, at least two tower sectors 2a (in the figures three tower sectors) are provided, each with a mounting structure 3, as can be seen in figures 2 and 3.

In step II, at least two guiding members 8 designed to guide the mounting structures 3 are provided as seen in figure 6. The guiding members should be present at the construction site when the tower sectors 2a with the mounting structures 3 are delivered.

In step III, two tower sectors 2a are arranged with mounting structures 3 parallel besides each other so that the mounting structures 6 on both face flanges 2b of the tower sectors 2a are mounted on the same guide member 8. This can be derived from figures 4 and 6 with the assumption, that the tower sectors 2a are arranged besides each other like in figure 6, but not tilted as shown on figure 4.

Besides, this step also explains the advantage of the adjusting means 9 shown in figure 6: since the vertical projection of the tower sectors 2a (seen from above) as positioned like in figure 4 is broader than the vertical projection of the tilted tower sectors 2a shown in figure 6, the non-tilted tower sectors need more lateral space than they need after tilting. Thus, the tower sectors 2a have to be shifted towards each other after tilting in order to connect them.

In step IV, the mounting members 6 are rotated with the mounting structures around their pivotable connection to their supporting member with a raising mechanism as shown in figure 5. It is pivoted into a position where the radii of the tower sectors facing each other (i.e. the planes of the edge flanges 2c) are both vertical to fit with each other.

In step V, the distance between the tower sectors is adjusted until the sides of the tower sectors facing each other meet, as shown in figure 6.

In step VI, the tower sectors are connected as shown in figures 8 and 9.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "member", "means" or a "system" or similar does not preclude the use of more than one respective component.

**Claims**

1. A mounting structure (3) for supporting a tower sector (2a) with predefined face flanges (2b) covering the curved faces of the surface shell of the tower sector (2a), the mounting structure (3) comprising:

   - an elongate supporting member (5) designed to be mounted on a surface with a base area (5c) on an elongate side of the supporting member (5), wherein while standing on the base area (5c) and used for support of a tower sector (2a), the length of the supporting member is oriented essentially horizontal and is the longest dimension followed by the height as second biggest dimension and the breadth,
   - an elongate mounting member (6) with two fixing means (6a) designed to be releasable fastened as a cord to a circular face flange (2b) of a tower element (2a) and additionally hold a tower sector (2a) so high over a ground that it does not touch it so that the mounting structure (3) can also be used as transport security element, for a tower sector (2a) facing upwards or for a tower sector (2a) facing downwards when the dimensions are chosen appropriately,
   - the supporting member (5) and the mounting member (6) being arranged parallel according to their longitudinal axes and pivotable connected with each other at their longitudinal ends to form legs of an angle, so that the plane of rotation between the supporting member (5) and the mounting member (6) is perpendicular to the base area (5c).

2. The mounting structure according to claim 1, wherein the mounting member (6) is pivotable connected to the supporting member (5) with a first end, while the opposite, second end of the mounting member (6) is movable in a circle, preferably wherein the first end of the mounting member (6) is pivotable connected to the supporting member (5) with a screw or bolt (5a) .

3. The mounting structure according to any of the preceding claims, wherein the supporting member (5) comprises an endstop to prevent a rotation of the mounting member (6) beyond a defined supporting position, especially a base plate (5c), a block or a bolt, preferably wherein the endstop is positioned at least in the area of the second end of the mounting member (6).

4. The mounting structure according to any of the preceding claims, comprising a raising mechanism (7) designed to raise one end of the mounting member (6) relative to the supporting member (5) in order to turn it around the pivotable connection with a force, the raising mechanism (7) preferably comprising a hydraulic cylinder.

5. The mounting structure according to any of the preceding claims, wherein the supporting member (5) comprises a hooked recess (5b) at the end opposite to the end where the supporting member (5) is connected to the mounting member (6) designed to mount a raising mechanism (7), particularly wherein the second end of the mounting member (6) comprises a slotted recess (6b) overlapping with the hooked recess (5b) such that the mounting member (6) is able to rotate even with a raising mechanism (7) mounted in the hooked recess (5b).

6. The mounting structure according to any of the preceding claims, wherein supporting member (5) and mounting member (6) are shaped such that a raising mechanism (7) can be installed even if the mounting member (6) is attached to a face flange (2b) of a tower sector (2a).

7. The mounting structure according to any of the preceding claims, wherein the mounting member (6) has the shape of a board arranged such that the plane of the board lies parallel to the plane of rotation,

   preferably wherein an upper edge comprises the fixing means (6a), the upper edge especially having the circular shape of a predefined face flange (2b), and/or
   preferably wherein a bottom edge opposite to the upper edge having a straight shape, and/or
   preferably wherein a side edge between the upper edge and the bottom edge is inclined relative to a line perpendicular to the bottom edge and especially bent.

8. The mounting structure according to any of the preceding claims, wherein the supporting member (5) has the shape of a board arranged such that the plane of the board lies parallel to the plane of rotation,

> preferably wherein the base area (5c) has a plane shape and/or
> preferably wherein an upper edge opposite to the base area (5c) has a curved shape, especially wherein the end where the supporting member (5) is connected to the mounting member (6) is higher than the opposite end, and/or
> preferably wherein a side edge between the upper edge and the base area (5c) is inclined relative to a line perpendicular to the base area.

9. The mounting structure according to any of the preceding claims, comprising an additional supporting member (5), especially wherein the two supporting members (5) are similar to each other, wherein the mounting member (6) is arranged between the two supporting members (5) .

10. The mounting structure according to any of the preceding claims, wherein concerning the distance D between the fixing means (6a) and a predefined radius R of a tower sector (2a) bigger than the distance D, the height H of the fixing means (6a) to the base area (5c) of the supporting member (5) is so big that a tower sector (2a) with the radius R fixed in the fixing means (6a) with its face flange (2b) lies above the base area (5c),

preferably wherein $H = A + R - \sqrt{R^2 - D^2/4}$ , with A > 0 cm, preferably A > 50 cm, and/or preferably, wherein the distance D is at least 1.2R, especially at least 1.45R, but preferably smaller than 1.8R, especially smaller than 1.75 R.

11. A mounting system (4) comprising at least two mounting structures (3) according to any of the preceding claims, the mounting structures (3) positioned laterally reversed to each other on a guiding member (8) with the pivotable connected ends facing each other or with the free ends facing each other, wherein the mounting structures (3) are connected to adjusting means (9) designed to move the mounting structures (3) relatively to each other on the guiding member (8) such that the distance between the mounting structures (3) can be adjusted,

> preferably wherein the orientation of the mounting structures (3) is such that the connected ends of the mounting members (6) with the respective support members (5) are facing each other for tower sectors (2a) facing upwards with their inner side
> and for tower sectors (2a) facing down with their inner side, the orientation of the mounting structures (3) is such that the non-connected ends of the mounting members (6) with the respective support members (6) are facing each other.

12. A method for connecting tower sectors (2a) with predefined face flanges (2b) covering the curved faces of the surface shell of the tower sectors (2a), the method comprising:

> - providing at least two tower sectors (2a), each with a mounting structure (3) according to any of claims 1 to 10 on each face flange (2b),
> - providing at least two guiding members (8) designed to guide the mounting structures (3),
> - arranging two tower sectors (2a) with mounting structures (3) parallel besides each other so that the mounting structures (6) on both face flanges (2b) of the tower sectors (2a) are mounted on the same guide member (8),
> - rotate the mounting members (6) with the mounting structures (3) around their pivotable connection (5a) to their supporting member (5), especially with a raising mechanism (7), such that radii of the tower sectors (2a) facing each other are both vertical,
> - adjusting the distance between the tower sectors (2a) until the sides of the tower sectors (2a) facing each other meet,
> - connecting the tower sectors (2a),

the method preferably performed by using a mounting system (4) according to claim 11.

13. The method according to claim 12, wherein a tower sector (2a) is connected to mounting structures (3) with each face flange (2b) such that the tower sector (2a) is arranged with an interior surface up or down, preferably wherein at least two tower sectors (2a) are arranged with the interior surface facing up and at least one tower sector (2a) is arranged with the interior surface facing down on mounting structures (3).

**14.** The method according to claim 12 or 13, wherein a tower sector (2a) is moved to the construction site by using the mounting structures (3) as transport securing device, especially wherein tower sectors (2a) are stacked by stacking their mounting structures (3).

**15.** The method according to one of claims 12 to 14, wherein a raising mechanism (7) is attached to the mounting structures (3) of a tower sector (2a) after the mounting members (6) are attached to the tower sector (2).


**Patentansprüche**

**1.** Befestigungsstruktur (3) zum Tragen eines Turmsektors (2a) mit vordefinierten Stirnseitenflanschen (2b), welche die gekrümmten Stirnseiten des Oberflächenmantels des Turmsektors (2a) bedecken, wobei die Befestigungsstruktur (3) Folgendes umfasst:

- ein langgestrecktes Trageelement (5), das dafür vorgesehen ist, an einer Oberfläche mit einer Grundfläche (5c) an einer Langseite des Trageelements (5) befestigt zu werden, wobei die Länge des Trageelements, während es auf der Grundfläche (5c) steht und zum Tragen eines Turmsektors (2a) verwendet wird, im Wesentlichen horizontal ausgerichtet ist und die längste Abmessung ist, gefolgt von der Höhe als zweitgrößter Abmessung und der Breite,
- ein langgestrecktes Befestigungselement (6) mit zwei Fixierungsmitteln (6a), die dafür gestaltet sind, lösbar als Band an einem kreisförmigen Stirnseitenflansch (2b) eines Turmelements (2a) befestigt zu werden und zusätzlich einen Turmsektor (2a) so hoch über einem Boden zu halten, dass er diesen nicht berührt, so dass die Befestigungsstruktur (3) auch als Transportsicherungselement für einen nach oben weisenden Turmsektor (2a) oder für einen nach unten weisenden Turmsektor (2a) verwendet werden kann, wenn die Abmessungen entsprechend ausgewählt sind,
- wobei das Trageelement (5) und das Befestigungselement (6) gemäß ihren Längsachsen parallel angeordnet und an ihren Längsenden schwenkbar miteinander verbunden sind, um Schenkel eines Winkels zu bilden, so dass die Ebene der Drehung zwischen dem Trageelement (5) und dem Befestigungselement (6) senkrecht zu der Grundfläche (5c) liegt.

**2.** Befestigungsstruktur nach Anspruch 1, wobei das Befestigungselement (6) an einem ersten Ende schwenkbar mit dem Trageelement (5) verbunden ist, während das gegenüberliegende zweite Ende des Befestigungselements (6) in einem Kreis beweglich ist, vorzugsweise wobei das erste Ende des Befestigungselements (6) mit einer Schraube oder einem Bolzen (5a) schwenkbar mit dem Trageelement (5) verbunden ist.

**3.** Befestigungsstruktur nach einem der vorhergehenden Ansprüche, wobei das Trageelement (5) einen Endanschlag umfasst, um eine Drehung des Befestigungselements (6) über eine definierte Trageposition hinaus zu verhindern, speziell eine Grundplatte (5c), einen Block oder einen Bolzen,
vorzugsweise wobei der Endanschlag zumindest in dem Bereich des zweiten Endes des Befestigungselements (6) positioniert ist.

**4.** Befestigungsstruktur nach einem der vorhergehenden Ansprüche, einen Hebemechanismus (7) umfassend, der dafür gestaltet ist, ein Ende des Befestigungselements (6) relativ zu dem Trageelement (5) anzuheben, um es mit einer Kraft um die Schwenkverbindung zu drehen,
vorzugsweise wobei der Hebemechanismus (7) einen Hydraulikzylinder umfasst.

**5.** Befestigungsstruktur nach einem der vorhergehenden Ansprüche, wobei das Trageelement (5) an dem Ende, das gegenüber den Ende liegt, wo das Trageelement (5) mit dem Befestigungselement (6) verbunden ist, eine Einhakvertiefung (5b) umfasst, die dafür gestaltet ist, einen Hebemechanismus (7) zu befestigen,
insbesondere wobei das zweite Ende des Befestigungselements (6) eine geschlitzte Vertiefung (6b) umfasst, die sich mit der Einhakvertiefung (5b) derart überlappt, dass das Befestigungselement (6) in der Lage ist, sich auch dann zu drehen, wenn ein Hebemechanismus (7) in der Einhakvertiefung (5b) befestigt ist.

**6.** Befestigungsstruktur nach einem der vorhergehenden Ansprüche, wobei das Trageelement (5) und das Befestigungselement (6) derart geformt sind, dass ein Hebemechanismus (7) auch dann installiert werden kann, wenn das Befestigungselement (6) an einem Stirnseitenflansch (2b) des Turmsektors (2a) angebracht ist.

**7.** Befestigungsstruktur nach einem der vorhergehenden Ansprüche, wobei das Befestigungselement (6) die Form einer Platte aufweist, die derart angeordnet ist, dass die Ebene der Platte parallel zu der Ebene der Drehung liegt,

vorzugsweise wobei ein oberer Rand das Fixierungsmittel (6a) umfasst, wobei der obere Rand speziell die Kreisform eines vordefinierten Stirnseitenflanschs (2b) aufweist und/oder vorzugsweise wobei ein unterer Rand gegenüber dem oberen Rand eine gerade Form aufweist und/oder

vorzugsweise wobei ein Seitenrand zwischen dem oberen Rand und dem unteren Rand relativ zu einer Linie geneigt ist, die senkrecht zu dem unteren Rand liegt und speziell gebogen ist.

8. Befestigungsstruktur nach einem der vorhergehenden Ansprüche, wobei das Befestigungselement (5) die Form einer Platte aufweist, die derart angeordnet ist, dass die Ebene der Platte parallel zu der Ebene der Drehung liegt,

vorzugsweise wobei die Grundfläche (5c) eine ebene Form aufweist und/oder
vorzugsweise wobei ein oberer Rand gegenüber der Grundfläche (5c) eine gekrümmte Form aufweist, speziell wobei das Ende, wo das Trageelement (5) mit dem Befestigungselement (6) verbunden ist, höher als das gegenüberliegende Ende ist und/oder vorzugsweise wobei ein Seitenrand zwischen dem oberen Rand und der Grundfläche (5c) relativ zu einer Linie geneigt ist, die senkrecht zu der Grundfläche liegt.

9. Befestigungsstruktur nach einem der vorhergehenden Ansprüche, ein zusätzliches Trageelement (5) umfassend, speziell wobei die zwei Trageelemente (5) einander ähnlich sind, wobei das Befestigungselement (6) zwischen den zwei Trageelementen (5) angeordnet ist.

10. Befestigungsstruktur nach einem der vorhergehenden Ansprüche, wobei bezüglich des Abstandes D zwischen dem Fixierungsmittel (6a) und einem vordefinierten Radius R eines Turmsektors (2a), der größer als der Abstand D ist, die Höhe H des Fixierungsmittels (6a) zu der Grundfläche (5c) des Trageelements (5) so groß ist, dass ein Turmsektor (2a) mit dem Radius R, der in dem Fixierungsmittel (6a) fixiert ist, mit seinem Stirnseitenflansch (2b) über der Grundfläche (5c) liegt, vorzugsweise wobei $H = A + R - \sqrt{R^2 - D^2/4}$, wobei A > 0 cm, vorzugsweise wobei A > 50 cm und/oder vorzugsweise wobei der Abstand D mindestens 1,2R beträgt, speziell mindestens 1,45R, jedoch vorzugsweise kleiner als 1,8R ist, speziell kleiner als 1,75R.

11. Befestigungssystem (4), mindestens zwei Befestigungsstrukturen (3) nach einem der vorhergehenden Ansprüche umfassend, wobei die Befestigungsstrukturen (3) seitlich umgekehrt zueinander auf einem Führungselement (8) positioniert sind, wobei die schwenkbaren verbundenen Enden zueinander hin weisen oder wobei die freien Enden zueinander hin weisen, wobei die Befestigungsstrukturen (3) mit Justierungsmitteln (9) verbunden sind, die dafür gestaltet sind, die Befestigungsstrukturen (3) relativ zueinander derart auf dem Führungselement (8) zu bewegen, dass der Abstand zwischen den Befestigungsstrukturen (3) justiert werden kann,

vorzugsweise wobei die Ausrichtung der Befestigungsstrukturen (3) derart ist, dass die verbundenen Enden der Befestigungselemente (6) mit den entsprechenden Trageelementen (5) bei Turmsektoren (2a), die mit ihrer Innenseite nach oben weisen, zueinander hin weisen, und
bei Turmsektoren (2a), die mit ihren Innenseiten nach unten weisen, die Ausrichtung der Befestigungsstrukturen (3) derart ist, dass die nicht verbundenen Enden der Befestigungselemente (6) mit den entsprechenden Trageelementen (6) zueinander hin weisen.

12. Verfahren zum Verbinden von Turmsektoren (2a) mit vordefinierten Stirnseitenflanschen (2b), welche die gekrümmten Flächen des Oberflächenmantels der Turmsektoren (2a) bedecken, wobei das Verfahren Folgendes umfasst:

- Bereitstellen mindestens zweier Turmsektoren (2a), jeder mit einer Befestigungsstruktur (3) nach einem der Ansprüche 1 bis 10 an jedem Stirnseitenflansch (2b),
- Bereitstellen mindestens zweier Führungselemente (8), die dafür gestaltet sind, die Befestigungsstrukturen (3) zu führen,
- Anordnen zweier Turmsektoren (2a) mit Befestigungsstrukturen (3) parallel nebeneinander derart, dass die Befestigungsstrukturen (6) an beiden Stirnseitenflanschen (2b) der Turmsektoren (2a) an demselben Führungselement (8) befestigt werden,
- Drehen der Befestigungselemente (6) mit den Befestigungsstrukturen (3) um ihre schwenkbare Verbindung (5a) zu ihrem Trageelement (5), speziell mit einem Hebemechanismus (7) derart, dass Radien der Turmsektoren (2a), die zueinander hin weisen, beide vertikal sind,

- Justieren des Abstandes zwischen den Turmsektoren (2a) bis sich die Seiten der Turmsektoren (2a), die zueinander hin weisen, treffen,
- Verbinden der Turmsektoren (2a),

wobei das Verfahren vorzugsweise mit Hilfe eines Befestigungssystems (4) nach Anspruch 11 ausgeführt wird.

13. Verfahren nach Anspruch 12, wobei ein Turmsektor (2a) mit dem Stirnseitenflansch (2b) derart an Befestigungsstrukturen (3) verbunden wird, dass der Turmsektor (2a) mit einer Innenfläche nach oben oder nach unten angeordnet wird,
vorzugsweise wobei mindestens zwei Turmsektoren (2a) mit der Innenfläche nach oben weisend und mindestens ein Turmsektor (2a) mit der Innenfläche nach unten weisend auf den Befestigungsstrukturen (3) angeordnet werden.

14. Verfahren nach Anspruch 12 oder 13, wobei ein Turmsektor (2a) mit Hilfe der Befestigungsstrukturen (3) als Transportsicherungsvorrichtung zu dem Standort der Errichtung transportiert wird,
speziell wobei die Turmsektoren (2a) durch Stapeln ihrer Befestigungsstrukturen (3) gestapelt werden.

15. Verfahren nach einem der Ansprüche 12 bis 14, wobei ein Hebemechanismus (7) an den Befestigungsstrukturen (3) eines Turmsektors (2a) angebracht wird, nachdem die Befestigungselemente (6) an dem Turmsektor (2) angebracht wurden.

**Revendications**

1. Structure (3) de montage pour supporter une partie (2a) de mât ayant des brides (2b) de face définies à l'avance recouvrant les faces incurvées d'une coque de surface de la partie (2a) du mât, la structure (3) de montage comprenant :

- un élément (5) oblong de support conçu pour être monté sur une surface ayant une zone (5c) de base d'un côté oblong de l'élément (5) de support, dans laquelle, alors que debout sur la zone (5c) de base et utilisé pour supporter une partie (2a) du mât, la longueur de l'élément de support est orientée essentiellement horizontalement et est la dimension la plus longue suivie par la hauteur comme deuxième dimension la plus grande et la largeur,
- un élément (6) oblong de montage ayant deux moyens (6a) de fixation conçu pour être fixé de manière amovible sous la forme d'une corde à une bride (2b) circulaire de face d'un élément (2a) du mât et maintenant supplémentairement une partie (2a) du mât si haut au-dessus d'un sol, qu'elle ne le touche pas, de sorte que la structure (3) de montage peut être utilisée aussi comme élément de sécurité pour le transport pour une partie (2a) du mât faisant face vers le haut ou pour une partie (2a) du mât faisant face vers le bas, lorsque les dimensions sont choisies de manière appropriée,
- l'élément (5) de support et l'élément (6) de montage étant disposés parallèlement suivant leurs axes longitudinaux et montées à pivotement l'un à l'autre à leurs extrémités longitudinales pour former des branches d'un angle, de manière à ce que le plan de rotation entre l'élément (5) de support et l'élément (6) de montage soit perpendiculaire à la zone (5c) de base.

2. Structure de montage suivant la revendication 1, dans laquelle l'élément (6) de montage est monté à pivotement à l'élément (5) de support par une première extrémité, tandis que la deuxième extrémité opposée de l'élément (6) de montage est mobile dans un cercle, dans laquelle de préférence la première extrémité de l'élément (6) de montage est montée à pivotement à l'élément (5) de support par une vis ou un boulon (5a).

3. Structure de montage suivant l'une quelconque des revendications précédentes, dans laquelle l'élément (5) de support comprend une butée d'extrémité pour empêcher une rotation de l'élément (6) de montage au-delà d'une position de support définie, en particulier une plaque (5c) de base, un bloc ou un boulon,
dans laquelle de préférence la butée d'extrémité est mise en position au moins dans la zone de la deuxième extrémité de l'élément (6) de montage.

4. Structure de montage suivant l'une quelconque des revendications précédentes, comprenant un mécanisme (7) de levage conçu pour lever une extrémité de l'élément (6) de montage par rapport à l'élément (5) de support afin de le faire tourner autour de la liaison à pivotement par une force,
le mécanisme (7) de levage comprenant de préférence un vérin hydraulique.

**5.** Structure de montage suivant l'une quelconque des revendications précédentes, dans laquelle l'élément (5) de support comprend un creux (5b) crochu à l'extrémité opposée à l'extrémité où l'élément (5) de support est monté sur l'élément (6) de montage conçu pour monter un mécanisme (7) de levage, dans laquelle en particulier la deuxième extrémité de l'élément (6) de montage comprend une cavité (6b) fendue chevauchant la cavité (5b) crochue, de manière à ce que l'élément (6) de montage puisse tourner même avec un mécanisme (7) de levage monté dans la cavité (5b) crochue.

**6.** Structure de montage suivant l'une quelconque des revendications précédentes, dans laquelle l'élément (5) de support et l'élément (6) de montage sont conformés, de manière à pouvoir monter un mécanisme (7) de levage même si l'élément (6) de montage est fixé à une bride (2b) de face d'une partie (2a) du mât.

**7.** Structure de montage suivant l'une quelconque des revendications précédentes, dans laquelle l'élément (6) de montage a la forme d'un panneau agencé, de manière à ce que le plan du panneau soit parallèle au plan de rotation,

dans laquelle de préférence un bord supérieur comprend le moyen (6a) de fixation, le bord supérieur ayant en particulier la forme circulaire d'une bride (2b) de face définie à l'avance et/ou
de préférence un bord de fond opposé au bord supérieur ayant une forme droite, et/ou
dans laquelle de préférence un bord latéral entre le bord supérieur et le bord de fond est incliné par rapport à une ligne perpendiculaire au bord de fond et en particulier incurvé.

**8.** Structure de montage suivant l'une quelconque des revendications précédentes, dans laquelle l'élément (5) de support a la forme d'un panneau agencé, de manière à ce que le plan du panneau soit parallèle au plan de rotation,

dans laquelle de préférence la zone (5c) de base a une forme plane et/ou
dans laquelle de préférence un bord supérieur opposé à la zone (5c) de base a une forme incurvée, dans laquelle en particulier l'extrémité où l'élément (5) de support est relié à l'élément (6) de montage est plus haute que l'extrémité opposée et/ou dans laquelle de préférence un bord latéral entre le bord supérieur et la zone (5c) de base est incliné par rapport à une ligne perpendiculaire à la zone de base.

**9.** Structure de montage suivant l'une quelconque des revendications précédentes, comprenant un élément (5) de support supplémentaire,
dans laquelle en particulier les deux éléments (5) de support sont semblables l'un à l'autre, dans laquelle l'élément (6) de montage est disposé entre les deux éléments (5) de support.

**10.** Structure de montage suivant l'une quelconque des revendications précédentes, dans laquelle en ce qui concerne la distance D entre le moyen (6a) de fixation et un rayon R défini à l'avance d'une partie (2a) du mât plus grand que la distance D, la hauteur H du moyen (6a) de fixation à la zone (5c) de base de l'élément (5) de support est si grande qu'une partie (2a) du mât, ayant le rayon R, fixée dans le moyen (6a) de fixation par sa bride (2b) de face se trouve au-dessus de la zone (5c) de base,

dans laquelle de préférence $H = A + R - \sqrt{R^2 - D^2 / 4}$ avec A > 0 cm, de préférence A > 50 cm et/ou, dans laquelle de préférence la distance D est d'au moins 1,2R, en particulier d'au moins 1,45R, mais de préférence plus petit que 1,8R, en particulier plus petit que 1,75 R.

**11.** Système (4) de montage comprenant au moins deux structures (3) de montage suivant l'une quelconque des revendications précédentes, les structures (3) de montage étant en position inversée latéralement l'une par rapport à l'autre sur un élément (8) de guidage en ayant les extrémités montées à pivotement se faisant face l'une à l'autre ou en ayant les extrémités libres se faisant face l'une à l'autre, dans lequel les structures (3) de montage sont reliées à des moyens (9) de réglage conçus pour déplacer les structures (3) de montage relativement l'une à l'autre sur l'élément (8) de guidage, de manière à pouvoir régler la distance entre les structures (3) de montage,

dans lequel de préférence l'orientation des structures (3) de montage est telle, que les extrémités montées des éléments (6) de montage sur les éléments (5) de support respectifs se font face l'une à l'autre pour des parties (2a) du mât faisant face vers le haut par leur face intérieure,
et pour des parties (2a) du mât faisant face vers le bas par leur face intérieure, l'orientation des structures (3) de montage est telle, que les extrémités non montées des éléments (6) de montage sur des éléments (6) de support respectifs se font face l'une à l'autre.

**12.** Procédé de liaison de parties (2a) du mât par des brides (2b) de face définies à l'avance recouvrant les faces incurvées de la coque de surface des parties (2a) du mât, le procédé comprenant :

- on se procure au moins deux parties (2a) du mât, ayant chacune une structure (3) de montage suivant l'une quelconque des revendications 1 à 10 sur chaque bride (2b) de face,
- on se procure au moins deux éléments (8) de guidage conçus pour guider les structures (3) de montage,
- on met deux parties (2a) du mât avec des structures (3) de montage parallèlement l'une à côté de l'autre, de sorte que les structures (6) de montage sur les deux brides (2b) de face des parties (2a) du mât sont montées sur le même élément (8) de guidage,
- on fait tourner les éléments (6) de montage avec les structures (3) de montage autour de leur liaison (5a) à pivotement à leur élément (5) de support, en particulier par un mécanisme (7) de levage, de manière à ce que des rayons des parties (2a) du mât se faisant face soient tous deux verticaux,
- on règle la distance entre les parties (2a) du mât jusqu'à ce que les côtés des parties (2a) du mât se faisant face se rencontrent,
- on assemble les parties (2a) du mât,

le procédé étant effectué de préférence en utilisant un système (4) de montage suivant la revendication 11.

**13.** Procédé suivant la revendication 12, dans lequel une partie (2a) du mât est assemblée à des structures (3) de montage par chaque bride (2b) de face, de manière à ce que la partie (2a) du mât soit disposée en ayant une surface intérieure vers le haut ou vers le bas,
dans lequel de préférence, au moins deux parties (2a) du mât sont disposées en ayant la surface intérieure faisant face vers le haut et au moins une partie (2a) du mât est disposée en ayant la surface intérieure faisant face vers le bas sur des structures (3) de montage.

**14.** Procédé suivant les revendications 12 ou 13, dans lequel on amène une partie (2a) du mât au site de construction en utilisant les structures (3) de montage comme dispositif de sécurité pour le transport, dans lequel en particulier, on empile des parties (2a) du mât en empilant leurs structures (3) de montage.

**15.** Procédé suivant l'une des revendications 12 à 14, dans lequel on fixe un mécanisme (7) de levage aux structures (3) de montage d'une partie (2a) du mât, après avoir fixé les éléments (6) de montage à la partie (2) du mât.

FIG 1

FIG 2

FIG 3

FIG 4

FIG 5

# FIG 6

# FIG 7

FIG 8

FIG 9

FIG 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2018429852 A1